# FASCICULE DE BREVET EUROPEEN

(11) **EP 2 731 833 B1**
(45) Date de publication et mention de la délivrance du brevet: **18.03.2020**
(21) Numéro de dépôt: 12732600.7
(22) Date de dépôt: 25.06.2012
(51) Int. Cl.: B60S 1/38

(54) **BALAI D'ESSUIE-GLACE SEMI-RIGIDE À SPOILER RECULÉ**
HALBSTARRES SCHEIBENWISCHERBLATT MIT VERSETZTEM SPOILER
SEMI-RIGID WINDSHIELD WIPER BLADE HAVING AN OFFSET SPOILER

(30) Priorité: 12.07.2011 FR 1156336
(43) Date de publication de la demande: 21.05.2014
(73) Titulaire: Valeo Systèmes d'Essuyage, 78322 Le Mesnil Saint Denis (FR)
(72) Inventeur: BILLOT, Philippe, F-78180 Montigny (FR); CATHALA, Franck, F-81170 St Martin Laguepie (FR); VILLEMIN, Grégory, F-78990 Elancourt (FR)
(74) Mandataire: Valeo Systèmes d'Essuyage
(86) Numéro de dépôt international: PCT/EP2012/062179
(87) Numéro de publication internationale: WO 2013/007499

(56) Documents cités:
- EP-A2- 2 319 739
- WO-A1-2009/065648
- DE-A1- 10 007 811
- FR-A1- 2 945 260
- KR-B1- 100 651 086
- US-A1- 2007 022 556

## Description

Le domaine de la présente invention est celui des équipements pour les véhicules, et plus particulièrement celui des équipements pour l'essuyage du pare-brise des automobiles.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits, soit, dans une version plus récente dénommée "flat blade" (pour "lame plate"), d'un ensemble semi-rigide qui maintient la lame racleuse sur toute sa longueur.
Un balai d'essuie-glace semi-rigide, du type flat blade, est classiquement constituée par trois élément qui s'étendent tout le long du balai : on trouve dans l'ordre, en partant du pare-brise et en s'éloignant perpendiculairement à celui-ci : une partie souple en élastomère constituant la lame racleuse, une partie centrale ou corps qui comporte en son sein une ou plusieurs lamelles en métal ou en polymère dur pour donner un cintrage intrinsèque au balai et enfin un becquet, ou spoiler, en forme de profil aérodynamique qui utilise le vent créé par la vitesse du véhicule pour exercer une force de maintien du balai contre le pare-brise.
La lame racleuse a globalement une forme triangulaire s'amincissant vers le bas dont le sommet inférieur se déplace sur le pare-brise et dont le côté supérieur est rattaché par une bande élastique mince au corps du balai. Cette bande mince permet, en se déformant, à la lame racleuse de s'incliner vers le pare-brise, dans un sens puis dans l'autre, lors des mouvements de va-et-vient du balai.
La partie centrale a généralement pour forme, en coupe transversale, un carré ou un rectangle, dont les côtés sont orientés parallèlement et perpendiculairement au pare-brise. La partie la plus basse de ce corps comporte généralement deux languettes s'étendant parallèlement au pare-brise et formant une butée élastique pour la lame racleuse lorsque celle-ci s'incline d'un côté ou de l'autre en direction du pare-brise. Le corps du balai présente également en son centre une ou deux rainures orientées parallèlement au pare-brise, dans la- ou dans lesquelles sont glissées la ou les lamelles rigides qui donnent son cintrage intrinsèque au balai. Traditionnellement la ou les lamelles sont entourées par de la matière élastomère en continuité avec le corps du balai mais elles peuvent également, dans certaines configurations, être positionnées de part et d'autre d'un plan de symétrie du corps et saillir plus ou moins latéralement dudit corps.
Le spoiler a généralement une forme d'aileron à trois côtés, dont le premier côté repose sur le corps du balai, le second côté s'éloigne du pare-brise et le troisième côté a la forme d'un profil aérodynamique avec une concavité orientée vers le haut de façon à former une surface d'appui pour le flux d'air incident.
Le concepteur d'un balai d'essuie-glace semi-rigide doit prendre en compte un certain nombre de contraintes parmi lesquelles figure l'intensité des diverses forces aérodynamiques qui s'appliquent sur le balai et l'impact qu'ont ces forces sur le maintien du balai en appui contre le pare-brise, et ce, quelle que soit la vitesse du véhicule, au moins dans une certaine limite. La résultante de ces forces aérodynamiques se décompose en une première force, dite de portance, et une seconde force, dite de trainée. Par convention, dans le domaine technique de l'invention, la portance est mesurée selon une direction perpendiculaire au pare-brise alors que la trainée est mesurée selon la direction tangente au pare-brise, transversalement à l'élongation longitudinale du balai.
La portance résulte, d'une part, d'efforts aérodynamiques qui s'exercent sur la lame racleuse et sur le corps du balai, dont la résultante est généralement dirigée vers le haut et, d'autre part, de l'action de l'air sur le spoiler, dont la composante verticale est dirigée vers le bas. La portance résultante, peut ainsi être dirigée vers le haut et s'opposer à la force d'un ressort qui plaque le balai contre le pare-brise, ou vers le bas et s'ajouter à la force dudit ressort, selon la forme et le positionnement donnée au spoiler. De façon optimale cette portance résultante doit avoir son sens dirigée vers le bas, ou à défaut faiblement dirigée vers le haut. Une portance trop faiblement dirigée vers le bas peut entraîner des décollements du balai de la surface du pare-brise, et donc des défauts d'essuyage, alors qu'une portance trop forte vers le bas augmente la force de frottement contre le pare-brise et par conséquent la puissance à fournir par le moteur d'entraînement des essuie-glaces.
En ce qui concerne la traînée, elle est dans tous les cas de figure orientée dans le sens du vent circulant sur le pare-brise. Elle repousse le balai et vient donc en appui du couple fourni par le moteur d'entraînement des essuie-glaces lors de la phase d'ouverture du balai mais s'oppose à ce couple lors de la phase de refermeture. Il s'ensuit qu'il est préférable d'obtenir une trainée la plus faible possible pour réduire la consommation du moteur d'entraînement.

Le document FR2945260 A1 décrit un balai d'essuie-glace de pare-brise de véhicule comportant une lame racleuse, un corps constitué d'un corps supérieur renfermant une lamelle rigide monobloc et d'un corps inférieur auquel est rattaché ladite lame racleuse, ledit balai d'essuie-glace comprend en outre un becquet s'étendant à partir dudit corps en présentant un profil aérodynamique entre un bord d'attaque et un bord de fuite.

La présente invention a pour objet de proposer un balai d'essuie-glace semi-rigide qui permette une réduction de la consommation du moteur d'entraînement par rapport aux modèles existants, tout en conservant une portance adaptée au maintien de l'appui du balai contre le pare-brise.
L'invention fait pour cela appel à balai comprenant une partie définie comme formant miroir, par rapport à un plan vertical passant par une extrémité inférieure d'une lame racleuse du balai, de la partie du corps qui est située en amont de ce même plan vertical. L'objectif d'une telle définition est uniquement de donner une limitation à l'extension d'une partie du balai, dans le sens du flux d'air. Ainsi, l'invention s'appliquera aussi bien à des balais dans lesquels ladite partie formant miroir est réellement symétrique de la partie du corps qui est située en amont du plan vertical passant par l'extrémité inférieure de la lame racleuse du balai qu'à des balais dans lesquels ladite partie formant miroir est virtuelle, c'est-à-dire, des balais dans lesquels la partie formant miroir n'est pas symétrique de la partie du corps qui est située en amont du plan passant par l'extrémité inférieure de la lame racleuse du balai, mais de forme quelconque.
Plus précisément, l'invention a pour objet un balai d'essuie-glace de pare-brise de véhicule, notamment automobile, comportant une lame racleuse, un corps auquel est rattachée ladite lame racleuse et un becquet s'étendant à partir dudit corps en présentant un profil aérodynamique entre un bord d'attaque et un bord de fuite, le balai présentant une limite entre le corps et le becquet définie par une surface horizontale passant par le bord d'attaque dudit profil, caractérisé en ce que ledit becquet s'étend horizontalement vers l'aval au-delà d'une partie, virtuelle ou non, définie comme formant miroir, par rapport à un plan vertical passant par une extrémité inférieure de la lame racleuse, de la partie du corps qui est située en amont de ce même plan vertical et en ce que la lamelle rigide (6) ne s'étend pas vers l'amont au-delà de la partie du corps (2) qui assure le maintien de la lame racleuse (1) et des lamelles élastiques (5).
Le recul du becquet, ou spoiler, permet d'améliorer, en intensité et en direction, l'action de la force de portance aérodynamique créée par ce becquet et donc de réduire la hauteur du balai sans lui faire perdre son efficacité d'essuyage.
Par exemple, la lame racleuse s'étend verticalement en s'amincissant vers le bas et/ou le becquet s'étend verticalement, ledit profil aérodynamique étant situé sur l'une des faces du becquet, apte à être orientée face au vent qui circule sur le pare-brise.
Avantageusement ledit corps présente une symétrie par rapport audit plan vertical, la partie virtuelle étant alors confondue avec la partie située en aval de ce même plan vertical.
Dans un mode particulier de réalisation le corps porte au moins une lamelle rigide s'étendant horizontalement, la ou lesdites lamelles se trouvant à l'intérieur de ladite partie formant miroir et/ou de ladite partie amont.
Dans un autre mode de réalisation le corps porte au moins une lamelle rigide s'étendant horizontalement, au moins l'une desdites lamelles s'étendant vers l'aval au-delà de ladite partie formant miroir.
Préférentiellement ladite lamelle s'étend jusqu'à l'extrémité horizontale aval dudit becquet. Elle assure ainsi un soutien à la partie aval du becquet, qui est généralement réalisée en un polymère souple.
Dans un mode particulier de réalisation ledit profil aérodynamique présente au moins un point d'inflexion. On peut ainsi optimiser le profil aérodynamique et, par suite, l'intensité et l'orientation de la force aérodynamique qu'il génère. Avantageusement ledit point d'inflexion se situe au droit de la partie formant miroir. De façon encore plus avantageuse le profil présente une partie plane en amont du point d'inflexion.
L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

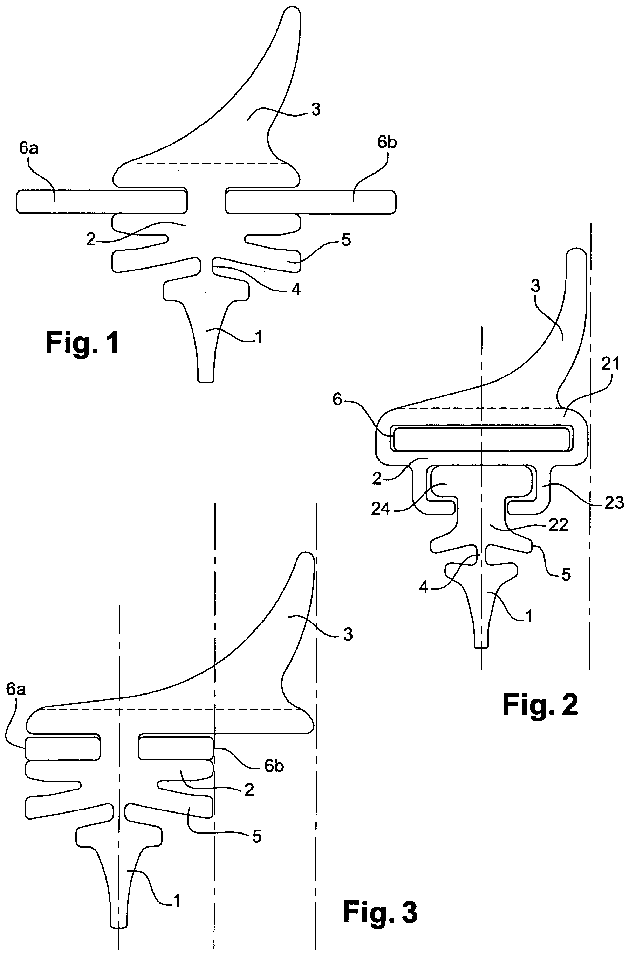

Sur ces dessins :
- la figure 1 est une vue en coupe transversale d'un premier balai d'essuie-glace selon l'art antérieur ;
- la figure 2 est une vue en coupe transversale d'un second balai d'essuie-glace selon l'art antérieur ;
- la figure 3 est une vue en coupe transversale d'un balai d'essuie-glace selon un premier mode de réalisation ;
- la figure 4 est une vue en coupe transversale d'un balai d'essuie-glace selon un second mode de réalisation ;
- la figure 5 représente une variante du balai d'essuie-glace du second mode de réalisation ;
- la figure 6 est une vue en coupe transversale d'un balai d'essuie-glace selon un troisième mode de réalisation ;
- la figure 7 est une vue en coupe transversale d'un balai d'essuie-glace selon un quatrième mode de réalisation de l'invention.
Dans l'ensemble de la description les termes haut et bas font référence à une plus ou moins grande distance du point considéré au pare-brise et les termes amont ou aval font références au sens de circulation de l'air sur le pare-brise. Enfin, les termes vertical et horizontal se référent aux directions perpendiculaire et tangente au pare-brise au point où se situe le balai d'essuie-glace.
En se référant à la figure 1, on voit, en coupe, un premier balai d'essuie-glace selon l'art antérieur comportant de bas en haut une lame racleuse 1, un corps 2 et un spoiler 3. La lame racleuse 1 a sensiblement la forme d'un triangle isocèle dont le sommet est positionné vers le bas et dont la fonction est de racler le pare-brise pour évacuer l'eau qui s'y trouve. Cette lame racleuse 1 est positionnée dans le plan de symétrie du corps 2 du balai auquel elle est rattachée par une bande mince 4 flexible, ce qui laisse la lame racleuse s'incliner vers l'amont ou vers l'aval selon le sens de rotation du balai lors de son mouvement de va-et-vient. Ce mouvement d'inclinaison est toutefois limité par deux languettes élastiques 5 qui s'étendent sensiblement horizontalement depuis le plan de symétrie du corps 2, respectivement vers l'amont et vers l'aval, pour servir de butées élastiques et limiter l'amplitude de la rotation de la lame racleuse autour de la bande mince 4.

Le corps 2 a une forme sensiblement parallélépipédique dont les côtés du rectangle, en coupe, sont horizontaux et verticaux. La partie centrale de ce corps est découpée par deux rainures horizontales, en forme de gorges, dans lesquelles sont insérées deux lamelles rigides 6a et 6b, dites vertèbres,, elles aussi horizontales, qui donnent un cintrage intrinsèque au balai pour assurer son application sur le pare-brise, y compris dans le cas d'un pare-brise incurvé. Dans l'art antérieur représenté ici, les lamelles rigides 6a et 6b sont disposées en vis-à-vis, de part et d'autre du plan de symétrie du corps 2.
Le spoiler 3 forme la partie supérieure du balai, et constitue une partie non symétrique, située au dessus de la partie symétrique que forme le corps 2 proprement dit. Pour mieux visualiser le corps et le différencier du spoiler une ligne tiretée a été dessinée sur les figures pour montrer la limite physique de chacun de ces deux éléments, celle-ci correspondant à une surface horizontale passant par le bord d'attaque du profil aérodynamique du spoiler 3. Le spoiler s'étend à l'intérieur d'un triangle rectangle dont le premier côté formant base repose sur le corps 2, dont le second côté forme une face aval sensiblement verticale et dont le troisième côté, ou hypoténuse, forme une face orientée face au vent et présentant un profil aérodynamique qui est choisi de façon à optimiser, en force et en direction, les forces aérodynamiques générées par le courant d'air circulant sur le pare-brise. Dans cet art antérieur le spoiler 3 est entièrement positionné au-dessus du corps 2 et de ses lamelles rigides 6a et 6b.
La figure 2 représente une autre version d'un balai d'essuie-glace de l'art antérieur. Dans cette version le corps 2 est réalisé en deux parties, pour permettre le remplacement de la lame racleuse sans avoir à mettre la totalité du balai au rebut. Pour cela le corps 2 comporte tout d'abord un corps supérieur 21 qui renferme une lamelle rigide 6 monobloc et qui s'étend vers le bas pour former deux rails 23 dans lesquels peut être glissé un support de lame 24 de forme parallélépipédique. Il comporte également un corps inférieur 22 constitué par le support de lame et par deux languettes élastiques 5 de fonction identique à celles du balai de la figure 1. Comme précédemment, le corps 2, par l'intermédiaire de son corps inférieur 22, porte une lame racleuse 1 qui est rattachée au support de lame 24 par une bande mince flexible 4. On constate que, là encore dans cette seconde version de l'art antérieur, le spoiler 3 est positionné entièrement verticalement au-dessus du corps 2 et de sa lamelle rigide 6.

Les figures 3 à 5 montrent des balais d'essuie-glaces similaire à celui de la figure 1 mais sur lesquels ont été apportées des améliorations. Ces premier et deuxième modes de réalisation comportent eux aussi une lame racleuse 1 de forme triangulaire, rattachée par l'intermédiaire d'une bande mince 4, à un corps monobloc 2 portant deux languettes élastiques 5, et un spoiler 3 solidaire de la face supérieure du corps 2. A la différence de l'art antérieur, le spoiler 3 est décalé vers l'aval et, de ce fait, sort de l'envergure horizontale du corps 2. Le profil du côté formant hypoténuse est sensiblement le même que dans l'art antérieur, avec un prolongement vers l'amont pour tenir compte de cette envergure horizontale allongée.
Quant aux lamelles rigides, la lamelle amont 6a a, sur les trois figures, une largeur réduite pour rester dans l'envergure horizontale du corps, alors que la lamelle aval 6b diffère entre les deux modes de réalisation. Dans le premier mode, représenté sur la figure 3, la lamelle aval 6b a, comme la lamelle amont 6a, une largeur réduite, limitée à l'envergure du corps 2. Dans le second mode, elle a, au contraire, une largeur augmentée et s'étend vers l'aval autant que le fait le spoiler 3. Elle assure ainsi un soutien à la partie reculée du spoiler et l'affranchit des déformations qui pourraient survenir du fait de la force exercée par le vent circulant sur le pare-brise. Dans les deux cas, la partie la plus aval du spoiler dépasse de la partie aval du corps 2, ou plus exactement, en tenant compte de l'extension de la lamelle 6b, elle dépasse de la partie du corps 2 qui fait miroir, par rapport au plan vertical médian de la lame racleuse, à sa partie qui est située en amont de ce plan de symétrie. Le plan médian de la lame racleuse est représenté sur les figures par un trait tireté mixte, alors que le plan formant limite vers l'aval de la partie miroir est représenté par un trait pointillé.

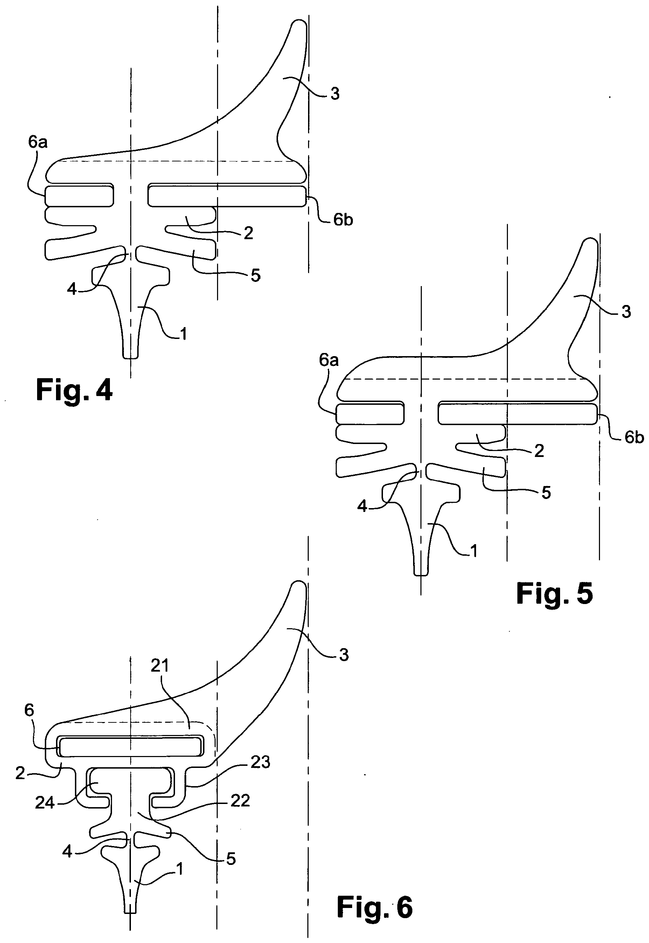

Sur la figure 5, le balai se distingue de celui de la figure 4 en ce qu'il présente un profil aérodynamique différent sur son troisième côté. Pour améliorer l'intensité et l'orientation de la force aérodynamique qu'il génère en direction du pare-brise, ce profil présente un point d'inflexion, situé ici au dessus de la partie formant miroir de la partie amont. Une partie plane, parallèle au second côté est prévue en amont dudit point d'inflexion. L'augmentation de la longueur du troisième côté qu'apporte l'invention donne ainsi une plus grande latitude pour choisir la forme à donner au profil aérodynamique ; elle permet notamment des profils à au moins un point inflexion, que ne permettaient pas toujours les spoilers de l'art antérieur.

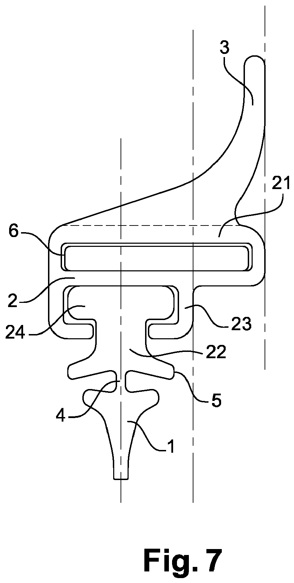

De la même façon, les figures 6 et 7 montrent des balais d'essuie-glaces similaires à celui de la figure 2 mais sur lesquels ont été apportées des améliorations. Ces troisième et quatrième modes de réalisation comportent eux aussi une lame racleuse 1 de forme triangulaire, rattachée par l'intermédiaire d'une bande mince 4, à un corps 2 constitué d'un corps supérieur 21 et d'un corps inférieure 22, et un spoiler 3 posé sur la face supérieure du corps 2. Comme précédemment, le corps supérieur 21 renferme une lamelle rigide 6 monobloc et s'étend vers le bas pour former deux rails 23 dans lesquels est glissé un support de lame 24. Quant au corps inférieur 22, il est, de même, constitué par le support de lame 24 et par deux languettes élastiques 5 identiques à celles du balai de la figure 2.
Comme dans les premier et second modes de réalisation, le spoiler 3 est décalé vers l'aval et sort de l'envergure horizontale du corps 2 ; le profil du côté formant hypoténuse du triangle est adapté, avec un prolongement vers l'amont, pour tenir compte de son envergure horizontale allongée. La partie amont de la lamelle 6 a, dans les deux modes, une largeur réduite pour rester dans l'envergure horizontale du corps, alors que sa partie aval diffère entre les deux modes de réalisation. Dans le troisième mode, représenté sur la figure 6, la partie aval a, comme la partie amont, une largeur réduite, limitée à l'envergure du corps 2. Dans le quatrième mode, représenté sur la figure 7, elle a au contraire une largeur augmentée et vient soutenir le spoiler vers l'aval. De nouveau, dans ces deux modes de réalisation la partie la plus aval du spoiler 3 dépasse de la partie du corps 2 qui fait miroir, par rapport au plan vertical médian de la lame racleuse, à sa partie qui est située en amont de ce plan de symétrie.
Dans la figure 6, la partie formant miroir est réelle, la lame 1 et le corps 2 étant symétriques par rapport au plan vertical passant par une extrémité inférieure d'une lame racleuse du balai, ici le plan médian du balai. Dans les figures 3, 4, 5 et 7, elle est virtuelle, le corps 2, en particulier la partie du corps 2 se trouvant à proximité du bord d'attaque du spoiler 3, voire les vertèbres 6a, 6b, n'étant pas symétriques par rapport audit plan.

On va maintenant décrire l'apport fourni par l'invention, en comparant les divers modes de réalisation, aux arts antérieurs illustrés sur les figures 1 et 2.
La trainée occasionnée par un balai, quelle que soit sa configuration, est grossièrement directement proportionnelle à la surface frontale en coupe qui est opposée au vent circulant sur le pare-brise. Pour la diminuer il convient donc de réduire l'amplitude verticale du balai et pour cela, une méthode consiste à réduire la hauteur du spoiler 3 sur le corps 2. Un des inconvénients associés à cette réduction provient d'une réduction corrélative de la force exercée vers le pare-brise par ce même spoiler et donc une possible insuffisance de la force d'appui exercée par le balai.
Pour remédier à cet inconvénient l'invention propose de remonter la valeur de la force d'appui en allongeant la largeur horizontale du spoiler. En repoussant le spoiler 3 vers l'arrière, et en le faisant sortir des limites d'un corps miroir de la partie amont du corps 2, on augmente la longueur du troisième côté de l'aileron aérodynamique, sans augmenter celle du second côté. La trainée générée reste réduite puisque profil aérodynamique n'est pas ré-augmenté. En revanche le recul du spoiler entraîne une modification du positionnement de la corde du profil aérodynamique, c'est à dire de la ligne joignant le bord d'attaque de ce profil, qui est situé à la jonction amont entre le spoiler 3 et le corps 2, et le bord de fuite, qui est situé à l'extrémité verticale du bord aval du spoiler 3. Elle est, en premier lieu, plus longue qu'elle ne l'était dans l'art antérieur et, en second lieu, plus couchée sur le pare-brise. Ces deux effets sont tels que la résultante des forces aérodynamiques qui s'exercent sur ce profil est, d'une part, augmentée en intensité ce qui lui permet de retrouver, ou même de dépasser, la valeur qu'elle avait dans l'art antérieur, et, d'autre part, plus orientée vers le bas ce qui améliore sa composante verticale et participe à une amélioration de la force d'appui du balai contre le pare-brise. L'invention a été décrite avec des corps de balai qui présentent un plan de symétrie vertical, et avec une lame racleuse, qui est elle aussi symétrique, les deux plans de symétrie étant confondus. L'invention portant sur le recul aval du spoiler par rapport au corps 2, elle peut également être mise en oeuvre sur des corps de forme non parallélépipédique et sur des lames racleuses de forme plus complexe. Pour apprécier la mise en oeuvre de l'invention dans de telles configurations le plan de symétrie de la lame racleuse est remplacé par un plan vertical, dit plan médian, qui passe par l'extrémité inférieure de ladite lame. La partie aval du corps 2 par rapport à ce plan médian est remplacée par le miroir de la partie amont par rapport à ce plan médian.
Le balai conforme à l'invention sera muni de becquets tels que décrits plus haut, sur toute ou partie de sa longueur. Ledit becquet pourra ainsi, par exemple, être interrompu au niveau de la connectique d'accrochage du balai à son bras d'entraînement et/ou de ses extrémités longitudinales, pour laisser la place à des connecteurs et/ou à des pièces terminales.
Enfin on peut remarquer que sur les versions de l'art antérieur la lamelle amont 6a dans le cas de la figure 1, comme la partie amont de la lamelle unique 6 dans le cas de la figure 2, sont réalisées avec une largeur relativement grande, par comparaison avec les versions représentées aux figures 3 à 5 et 7). Dans le cas de la figure 1, la lamelle 6a s'étend vers l'amont au-delà du corps 2 ; dans le cas de la figure 2, la lamelle rigide 6 se projette vers l'amont au-delà des rails 23, c'est-à-dire au-delà de la partie du corps 2 qui est strictement nécessaire au maintien de la partie inférieure 22. En raccourcissant ainsi la partie amont des lamelles rigides, les modes de réalisation de l'invention évoqué plus haut participent à réduire l'influence des lamelles sur le cheminement de l'air qui circule sur le pare-brise et à éviter la création de turbulences entre la lamelle rigide et le pare-brise, ce qui pourrait augmenter l'intensité de la force aérodynamique qui tend à faire décoller le balai du pare-brise.
Le raccourcissement de la partie amont de la ou des lamelles rigides constitue ainsi une autre amélioration qui est apportée aux balais d'essuie-glace par rapport à ceux de l'art antérieur, en apportant une solution à un second problème technique, qui est de réduire autant que faire se peut l'influence qu'ont les éléments constituant le corps du balai sur la composante de la force de portance qui est orientée vers le bas. La version représentée sur les figures 3 à 5 et 7 constitue à cet effet un mode préférentiel de réalisation, dans la mesure où la lamelle rigide, 6a ou 6, ne s'étend pas vers l'amont au delà de la partie du corps 2 qui assure le maintien de la lame racleuse 1 et des languettes élastiques 5.
Cela étant, une telle solution pourra également être utilisée avec des balais dont les spoilers ne sont pas nécessairement déportés vers l'aval. Autrement dit, l'invention s'intéresse aussi à des balais d'essuie-glace de pare-brise de véhicule, notamment automobile, comportant une lame racleuse 1, un corps 2, auquel est rattachée ladite lame racleuse 1, et une ou des vertèbres 6, 6a, 6b, et dans lequel l'extension vers l'amont desdites vertèbres 6, 6a est limitée à l'extension vers l'amont dudit corps 1.

## Revendications

1. Balai d'essuie-glace de pare-brise de véhicule, notamment automobile, comportant
- une lame racleuse (1) ayant des languettes élastiques (5),
- un corps (2) constitué d'un corps supérieur (21) renfermant une lamelle rigide monobloc (6) et d'un corps inférieur (22) auquel est rattaché ladite lame racleuse (1)
- un becquet (3) s'étendant à partir dudit corps en présentant un profil aérodynamique entre un bord d'attaque et un bord de fuite, le balai présentant une limite entre le corps (2) et le becquet (3) définie par une surface horizontale passant par le bord d'attaque dudit profil,
**caractérisé en ce que** ledit becquet s'étend horizontalement vers l'aval au-delà d'une partie, virtuelle ou non, définie comme formant le miroir, par rapport à un plan vertical passant par une extrémité inférieure de la lame racleuse (1), de la partie du corps qui est située en amont de ce même plan vertical et **en ce que** la lamelle rigide (6) ne s'étend pas vers l'amont au-delà de la partie du corps (2) qui assure le maintien de la lame racleuse (1) et des languettes élastiques (5).

2. Balai d'essuie-glace selon la revendication 1 dans lequel ledit corps présente une symétrie par rapport audit plan vertical, la partie virtuelle étant alors confondue avec la partie située en aval de ce même plan vertical.

3. Balai d'essuie-glace selon l'une des revendications 1 ou 2 dans lequel le corps (2) porte au moins une lamelle rigide (6) s'étendant horizontalement, la lamelle (6) se trouvant à l'intérieur de ladite partie formant miroir et/ou de ladite partie amont.

4. Balai d'essuie-glace selon l'une des revendications 1 ou 2 dans lequel le corps (2) porte au moins une lamelle rigide (6) s'étendant horizontalement, la lamelle (6) s'étendant vers l'aval au-delà de ladite partie formant miroir.

5. Balai d'essuie-glace selon la revendication 4 dans lequel ladite lamelle (6) s'étend jusqu'à l'extrémité horizontale aval dudit becquet.

6. Balai d'essuie-glace selon l'une des revendications 1 à 5 dans lequel ledit profil aérodynamique présente au moins un point d'inflexion.

7. Balai d'essuie-glace selon la revendication 6 dans lequel le point d'inflexion se situe au droit de la partie formant miroir.

8. Balai d'essuie-glace selon l'une des revendications 6 ou 7 dans lequel le profil présente une partie plane en amont du point d'inflexion.

## Patentansprüche

1. Scheibenwischerblatt für ein Fahrzeug, insbesondere Kraftfahrzeug, aufweisend
- ein Wischgummi (1) mit elastischen Stegen (5),
- einen Körper (2), welcher von einem oberen Körper (21), welcher eine einstückige, starre Zunge (6) umschließt, und einem unteren Körper (22) gebildet wird, an welchen das Wischgummi (1) angegliedert ist,
- wobei sich ein Spoiler (3) aus dem Körper erstreckt, indem er ein aerodynamisches Profil zwischen einer Vorderkante und einer Hinterkante aufweist, wobei das Blatt eine Grenze zwischen dem Körper (2) und dem Spoiler (3) aufweist , welche durch eine horizontale Fläche definiert wird, welche durch die Vorderkante des Profils verläuft,
**dadurch gekennzeichnet, dass** sich der Spoiler horizontal in der stromabwärtigen Richtung über einen virtuellen oder nicht virtuellen Teil, hinaus in Bezug auf eine vertikale Ebene erstreckt, welche durch ein unteres Ende des Wischgummis (1) verläuft, welcher dadurch definiert wird, dass er den Spiegel des Teils des Körpers, welcher sich stromaufwärts von dieser gleichen vertikalen Ebene befindet, bildet, und dass sich die starre Zunge (6) in der stromaufwärtigen Richtung nicht über den Teil der Körpers (2), welcher das Festhalten des Wischgummis (1) und der elastischen Stege (5) gewährleistet, hinaus erstreckt.

2. Scheibenwischerblatt nach Anspruch 1, bei welchem der Körper eine Symmetrie in Bezug auf die vertikale Ebene aufweist, wobei der virtuelle Teil nun mit dem Teil, welcher sich stromaufwärts von dieser gleichen vertikalen Ebene befindet, verschmolzen ist.

3. Scheibenwischerblatt nach einem der Ansprüche 1 oder 2, bei welchem der Körper (2) mindestens eine starre, sich horizontal erstreckende Zunge (6) trägt, wobei sich die Zunge (6) im Inneren des Spiegel bildenden Teils und/oder des stromaufwärtigen Teils befindet.

4. Scheibenwischerblatt nach einem der Ansprüche 1 oder 2, bei welchem der Körper (2) mindestens eine starre, sich horizontal erstreckende Zunge (6) trägt, wobei sich die Zunge (6) in der stromabwärtigen Richtung über den Spiegel bildenden Teil hinaus erstreckt.

5. Scheibenwischerblatt nach Anspruch 4, bei welchem die Zunge (6) sich bis zu dem stromabwärtigen, horizontalen Ende des Spoilers erstreckt.

6. Scheibenwischerblatt nach einem der Ansprüche 1 bis 5, bei welchem das aerodynamische Profil mindestens einen Wendepunkt aufweist.

7. Scheibenwischerblatt nach Anspruch 6, bei welchem sich der Wendepunkt rechts von dem Spiegel bildenden Teil befindet.

8. Scheibenwischerblatt nach einem der Ansprüche 6 oder 7, bei welchem das Profil einen ebenen Bereich stromaufwärts von dem Wendepunkt aufweist.

## Claims

1. A wiper blade for the windshield of a vehicle, notably a motor vehicle, comprising
- a blade rubber (1) having elastic tongues (5),
- a body (2) consisting of an upper body (21) containing a one-piece rigid strip (6) and of a lower body (22) to which said blade rubber (1) is attached,
- a spoiler (3) extending from said body and having an aerodynamic profile between a leading edge and a trailing edge, the blade having a boundary between the body (2) and the spoiler (3) that is defined by a horizontal surface passing through the leading edge of said profile,
**characterized in that** said spoiler extends horizontally downstream beyond a part, virtual or otherwise, defined as forming the mirror image, about a vertical plane passing through a lower end of the blade rubber (1), of that part of the body that is situated upstream of this same vertical plane and **in that** the rigid strip (6) does not extend upstream beyond the part of the body (2) that holds the blade rubber (1) and the elastic tongues (5).

2. The wiper blade as claimed in claim 1, in which said body exhibits symmetry about said vertical plane, the virtual part then coinciding with the part situated downstream of this same vertical plane.

3. The wiper blade as claimed in one of claims 1 and 2, in which the body (2) bears at least one rigid strip (6) extending horizontally, the strip (6) lying within said mirror-image-forming part and/or said upstream part.

4. The wiper blade as claimed in one of claims 1 and 2, in which the body (2) bears at least one rigid strip (6) extending horizontally, the strip (6) extending downstream beyond said mirror-image-forming part.

5. The wiper blade as claimed in claim 4, in which said strip (6) extends as far as the downstream horizontal end of said spoiler.

6. The wiper blade as claimed in one of claims 1 to 5, in which said aerodynamic profile has at least one point of inflection.

7. The wiper blade as claimed in claim 6, in which the point of inflection is situated in line with the mirror-image-forming part.

8. The wiper blade as claimed in one of claims 6 and 7, in which the profile has a planar part upstream of the point of inflection.
